# EUROPEAN PATENT SPECIFICATION

(11) **EP 3 464 041 B1**
(45) Date of publication and mention of the grant of the patent: **08.04.2026**
(21) Application number: 17735224.2
(22) Date of filing: 25.05.2017
(51) Int. Cl.: B62K 19/16, B62K 19/02

(54) **METHOD OF MANUFACTURING A BICYCLE FRAME AND BICYCLE MADE THROUGH SAID METHOD**
VERFAHREN ZUR HERSTELLUNG EINES FAHRRADRAHMENS UND DURCH BESAGTES VERFAHREN HERGESTELLTES FAHRRAD
PROCÉDÉ DE FABRICATION D'UN CADRE DE BICYCLETTE, ET BICYCLETTE FABRIQUÉE PAR LEDIT PROCÉDÉ

(30) Priority: 26.05.2016 IT UA20163846
(43) Date of publication of application: 10.04.2019
(73) Proprietor: Exept S.r.l., 20122 Milano (IT)
(72) Inventor: REBAGLIATI, Alessio, 17024 Finale Ligure (IT)
(74) Representative: Dragotti & Associati S.P.A.
(86) International application number: PCT/IB2017/053083
(87) International publication number: WO 2017/203460

(56) References cited:
- DE-A1- 10 340 339
- DE-A1- 3 145 002
- US-A- 5 160 682
- US-A- 5 318 819
- US-A- 5 762 352
- US-A- 5 842 711
- US-A1- 2004 061 302
- US-A1- 2012 003 408
- US-B1- 6 340 509

## Description

### TECHNICAL FIELD

The present invention refers to manufacturing method of bicycle frames and to so-made bicycles.

### STATE OF THE ART

In the field of bicycles the use of light materials for making the frame is becoming more widely used, so that the whole bicycle has an overall little weight.

In this field two manufacturing methodologies are clearly different, i.e. the series one and the tailored one.

The two methodologies are different from one another because, whereas in the first one only some, frame sizes are available per each bicycle model, in the second one the frame is made on the basis of the user's anthropometric data in almost handmade way.

The present invention refers mainly to the production of frames for tailored bicycles.

In this field, by taking as a reference the bicycles made of composite material, the manufacturing method provides the tube parts constituting the frame for being joined by joint elements outside of the tube frames and made by a so-called "wrapping process".

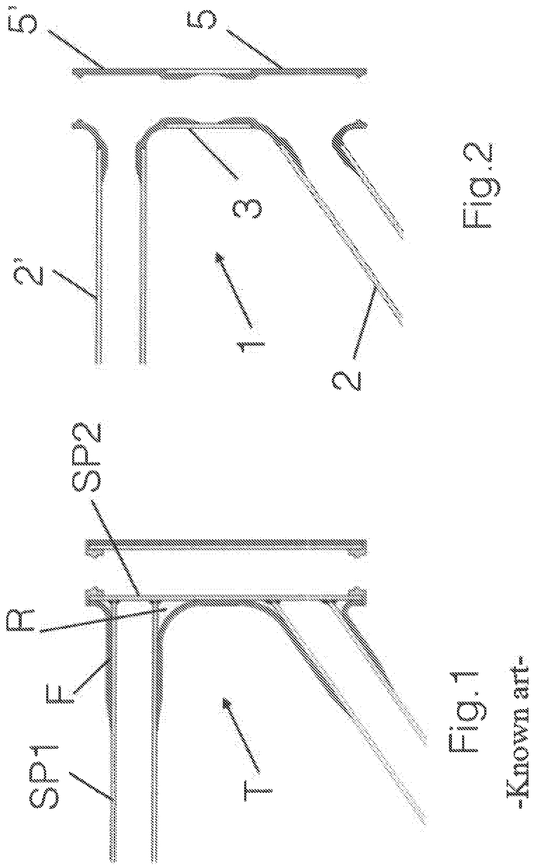

In brief, - and referring to fig. 1 in which part of a frame T of a conventional bicycle is shown - the wrap F provides for the tube parts SP1 and SP2 of the frame T for being at first arranged and oriented in accordance with case by case needs (considering the user's anthropometric data) and glued in position one to another; then a filler R is applied (for example, a plaster) useful for supporting the wrap F; such a wrap is then applied and consists of a plurality of bandages pre- impregnated with resin, which surmount part of each tube part SP1 and SP2 in addition to the joint zone of the two parts and the filler R; when all the tube parts of the frame T have then been joined, the frame is put in an autoclave, where the combined action of pressure and temperature causes the curing of the resin of the wrap, in accordance with known principles not explained in this document.

However this process, although being valid in principle, has some limitations.

First of all, it has to be guaranteed that the tube parts do not move reciprocally during the gluing; moreover, the filler has to be applied and formed accurately; lastly, the whole process needs long times on the whole and, therefore, relatively high costs.

Another limitation relates to the high amount of used material, involving a frame weight increase.

Document US 5,318,819 describes a method and a joint for connecting, tube members in order to form a bicycle frame, such a joint providing ends to be force-fitted engaged in the corresponding tube member. The joint is a finished piece as the tube members, whereas the fastening between joint and tube members is strengthened by an inner core of expanded material provided in the coupling zones between joints and tube members. From the outside, the ends of the tube members and the joint are covered with an expanded material in turn closed to the outside by a containing wrap. Once the expandable material has been applied in the described points, the expansion is activated and the expanded material locks the tube members and the joint one to another. The document does not show any connecting joint between the tube members, made by shaping a pre- impregnated material coupled in this condition to the tube members by inserting joint ends to the inside of said tube members by shape coupling, and that is successively treated for curing the resin of the joint and at the same time connecting the tube members.

Document US 5,160,682 describes a process wherein the connection between tube members and elements jointing with these tube elements is obtained by covering on the outside the ends of the tube members intended to be coupled to the joints and the joint elements with at least one layer of carbon fibers impregnated with resin, and by curing the resin of this layer in a mold by compressing and heating. Also this document does not provide any connecting joint between the tube members, made by shaping a pre-impregnated material coupled in this condition to the tube members by inserting joint ends to the inside of said tube members by shape coupling, and that is successively treated for curing the resin of the joint and at die same time connecting the tube members.

Document 5,762,352 describes a process for making a fork for bicycles, wherein the fork element is made in a mould by shaping a fiber fabric impregnated with resin, by applying a pneumatic compression from the inside of the piece against the mould walls. An end coupling the fork to a sleeve is applied to the closed end of the fork base by chemical-physical adhesion and the end is tubular and shaped in the same mould of the fork but does not constitute a single piece with the latter. Also this document does not provide any connecting joint between the tube members, made by shaping a pre-impregnated material coupled in this condition to the tube members by inserting joint ends to the inside of said tube members by shape coupling, and that is successively treated for curing the resin of the joint and at the same time connecting the tube members.

Document US 2004/0061302 describes how the elements jointing frame parts of a bicycle are made by covering the joint zones with fiber layers impregnated with resin, which are cured and compressed against the frame elements in a mould.

### OBJECTS AND SUMMARY OF THE INVENTION

Object of the present invention is to overcome the drawbacks of the known art. In particular, object of the present invention is to provide a method of manufacturing a bicycle frame that can be realized with reduced material use and allow handmade operations to be reduced, so as to be less burdensome in time and cost terms.

Again, an object of the invention is to provide a so-made method (and a so-manufactured frame), which allows frame geometries to be better controlled.

These and other objects of the present invention are achieved by a method incorporating the features of the appended claims, which are integral part of the present description.

The general idea, basis of the present invention, is to manufacture at least part of a bicycle frame by joining at least two tube parts one to another by a joint element made of a composite material comprising a cured resin, wherein the joint element - when the resin is not cured - is inserted at least inside an end portion of each tube part and, in this position, undergoes the resin curing, whereas the parts are held in their correct relative position.

This solution has the advantage of avoiding the wrapping process known in the state of the art and, therefore, avoiding the filler use.

Therefore the re suiting frame, in addition to be sturdy, is advantageously manufactured more cheaply, in addition to be adapted to achieve to afore listed purposes.

Therefore, a first object of the invention is a method of manufacturing at least part of a frame of a bicycle, wherein the frame comprises tube parts joined one to another, comprising the step of joining at least one first and one second tube parts by a joint element (5) made of a composite material comprising a curable resin, which method provides the following steps:
- inserting at least part of said joint element when the resin is not cured, inside at least one end portion of each tube parts, so that said tube parts are not directly in contact with each other;
- making said resin cure.

According to the invention, the method comprises the steps of
a. arranging at least one first and one second tube parts intended to be joined together;
b. arranging an expandable support,
c. coating at least part of said expandable support with at least one layer of material pre- impregnated with a non-cured resin, so that said non-cured joint element is made,
d. fitting the end parts of said joint element in corresponding end portions of each tube parts,
e. housing the end portions of each tube parts and the non-cured joint element in a mould, the mould being provided with at least one mould part and at least one matched-mould part and closing said at least one mould part with said at least one matched-mould part;
f. making said resin cure.

Therefore, the joint element connecting the tube parts one to another has, at the ends coupling with a corresponding tube member, an end portion to be inserted in the coupling end of the corresponding tube member, whose insertion end has shape and size corresponding to the shape and size of the inner void of the tube member, at feast in a cured condition, but preferably already, in the non-cured resin condition.

Substantially, the joint is made of a pie-impregnated material of the pre-preg type, shaped so as to have substantially the final shape of the joint itself, i.e. the shape in the cured condition and coupled to the tube parts said joint element has to connect one to another.

The use of the expandable support, preferably in a partially expanded condition and anyway such to constitute a support sufficiently stable for applying, around the same, some non-cured composite material intended to form the joint, allows the material pre-impregnated with resin in non-cured condition to be arranged so that the material of the joint is easily worked and inserted in the tube parts. The so-made assembly is inserted in the mould, thus allowing the resin to be cured in a stable relative-positioning condition of the tube parts, to the benefit of execution rapidity and precision thereof.

Furthermore, immediately before and/or during the curing step in the mould, the expandable support can be further expanded and thus applies a compression of the joint element against the mould walls, thereby correctly forming the joint element that locks the tube elements also, Le. the tube parts in the correct relative position.

According to another advantageous feature, the mould is made with such a configuration to comprise a mouth for at least part of the tube parts intended to be connected to one another by the joint element, at least one of said mouths intended to receive the end portion of a corresponding tube part or at least one part of said mouths for the corresponding tube parts is made as having flexible walls.

Such provision is particularly advantageous when several tube parts and several joints are provided, the joints connecting the same parts forming a frame element. In this case, per each joint a mould is provided and the moulds are fastened in the relative position with the relative orientations between each other corresponding to the frame shape to be made.

In fact in this condition, thanks to the flexible mouth/s the tube parts can be freely oriented and therefore can take the correct relative orientation with respect to the other tube parts , in a still non-cured condition of the joint. In a frame closed on itself, this relative orientation of the tube parts is determined for example substantially by the length of the tube parts.

According to another advantageous feature of the method according to the present invention, in this way not only a portion of the frame can be made but the whole frame (or at least its main portions).

According to this embodiment, therefore the method comprises the following steps:
- Providing a number of moulds corresponding to the number of joints designed for making a frame with a predetermined project;

said moulds being shaped correspondingly to the outer shape provided for each joint;
providing a framework for variably positioning and orienting, in the subtended plane thereof, said one or more moulds and fastening the single moulds in the relative positions the frame design provides for and in the relative orientations said frame design provides for;
providing a number of tube parts corresponding to those of said frame design and having length corresponding to that of the frame design;
providing a number of expandable supports for at least part, preferably for all, of the joints said frame design provides for;
carrying out, for each joint, the steps c) to f), that is to say:
   c. coating at least part of said expandable support with at least one layer of material pre-impregnated with a non-cured resin, so that said non-cured joint element is made,
   d. fitting the end parts of said joint element in corresponding end portions of each tube parts,
   e. housing the end portions of each tube parts and the non-cured joint element in a mould, the mould being provided with at least one mould part and at least one matched-mould part and closing said at least one mould part with said at least one matched-mould part;
   f. making said resin cure.

Analogously to what stated before, also in this case, immediately before and/or during the curing step in the mould, each expandable support can be further expanded and thus applies a compression of the joint element against the mould walls, thereby correctly forming the joint element that locks the tube elements also, i.e. the tube parts in the correct relative position.

In the afore mentioned case, the steps of forming and curing the joint can be carried out both contemporaneously and in case according to a predetermined sequence that provides both a time succession and a succession relating to order of the joints that undergo the expanding and curing operations.

In particular, for a specific application of a bicycle frame, the step of causing the resin to cure is advantageously carried out contemporaneously for the plurality of provided joint elements and, as stated before, by combined action of pressure and temperature (preferably in an autoclave): all the joint elements, once connected to the various tube parts forming the frame, are cured together, to preserve the desired geometry.

As already mentioned before, for some specific applications, it may be recommended that the steps of curing the joints can be carried out according to a predetermined order and with times shifted from one another per each joint.

Another object of the invention is a device for manufacturing the frame of bicycles, comprising at least one mould in turn comprising
- at least one mould body, preferably openable in two half-shells, i.e. in at least one mould part and one matched-mould part,
- said mould having the final shape of the joint element connecting at least two tube parts one to another
- said mould having a mouth intended to receive an end portion of a tube part for each or at least part of the tube parts to be connected to one another,
- at least part or all of said mouths of the mould being made with flexible walls;
said device further comprising:
- at least one support expandable to different sizes and shaped for applying, on the same, one or more layers of non-cured composite material intended to form a joint;
- one unit adapted to cause the expansion of the expandable support by physical and/or chemical actions;
- at least one mould-holder support or template, for the at least one mould defining a bidimensional or three-dimensional surface and having fastening members to fasten said mould in a plurality of different positions along the extent of said surface and with a plurality of different orientations.

In case of the bicycle frame or a frame closed on itself, the device has a number of moulds corresponding to the number of joint elements provided in the configuration of said mould, and said mould-holder support or said template are provided with fastening members for each mould and in the relative positions of said moulds and with the relative orientations of said moulds provided correspondingly to the frame configuration, i.e. correspondingly to the design project.

According to an embodiment, the expandable support is made preferably as inflatable element adapted to be coated with a layer of a material pre-impregnated with a non-cured resin. In this case, the coating is carried out in an at least partially inflated support condition so mat a joint element is made between tube parts of the frame in the non-cured condition of the composite; in this case, the same expandable support can be used several times, without the need of adapting it to me particular geometry to be obtained.

Other object of the invention are a bicycle frame comprising at least two tube parts joined to one another by a joint element,, wherein said joint element is arranged at least partially inside said tube parts and/or a bicycle frame made according to the method and/or the device of the invention.

Obviously, the steps of the method according to the present invention can provide, after the forming and curing steps, further surface machining steps as the grinding of the joint, surface treatments of preparing the outer joint surfaces and/or applying finishing coats.

Further advantageous features are object of the attached claims, which are integral part of the present description.

### BRIEF DESCRIPTION OF THE DRAWINGS

The invention will be hereinafter described referring to non-limitative examples, given for purposes of illustration only and without limitation in the annexed drawings. These drawings show different aspects and embodiments of the invention and, as appropriate, reference numbers denoting structures, components, materials and/or similar elements in different figures are depicted with similar reference numbers.

In the attached figures:
Figure 1 depicts a section of portion of a bicycle frame made by the known afore described wrapping technique;
Figure 2 depicts a section of portion of a bicycle frame according to the invention;
Figure 3 depicts an exploded view of a bicycle frame according to the invention;
Figures 4 and 5 depict different views of the frame of the preceding figure;
Figure 6 depicts a section of a mould that is portion of a manufacturing device of a bicycle frame according to the invention, in an operative condition;
Figure 7 depicts a section of part of a bicycle frame according to an invention variation.

### DETAILED DESCRIPTION OF THE INVENTION

Although the invention is susceptible to various modifications and alternative implementations, some preferred embodiments are shown in the drawings and will be herein described in detail.

Anyway, it has to be intended that there is no intention to limit the invention to the specific illustrated embodiment but, on the contrary, it intends to cover all modifications, alternative implementations and equivalents falling in the invention scope as defined in the claims.

The use of "for example", "etc." "or" denotes non-limiting and not-exclusive alternatives, unless differently specified.
The use of "include" means 'include, but not limited to", unless differently specified.

Indications such as "vertical " and "horizontal", "upper" and "bottom" (in lack of other indications) have to be interpreted referring to the mounting (or operative) conditions and referring to the normal terminology used in the current language, where "vertical" means a direction substantially parallel to that of the gravity vector "g" and horizontal means a direction perpendicular thereto.

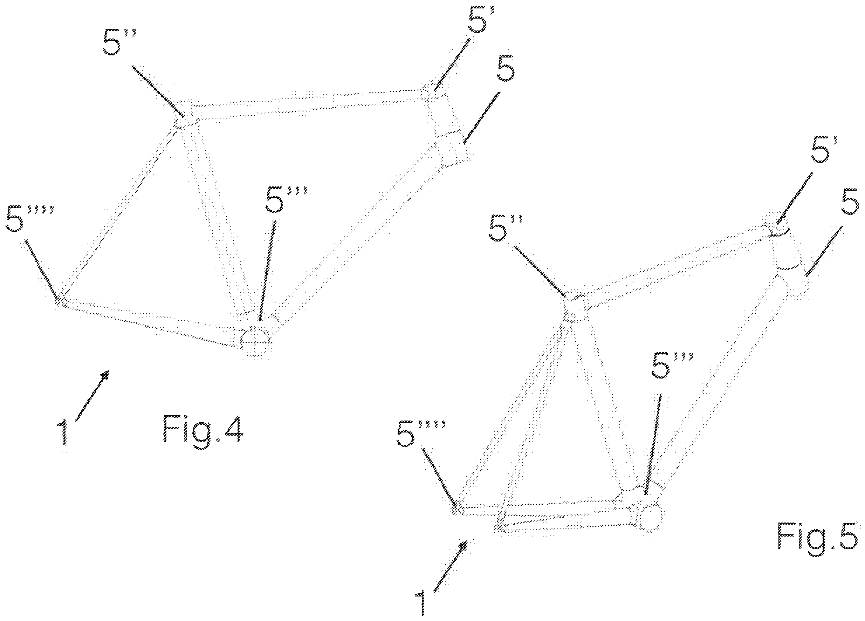

Referring to figures 2-6, it is shown (completely or partially) a frame 1 of a bicycle comprising tube parts 2, 3, 2', 3', 2", 3" joined to one another.

Such tube parts are tube of any section (circular, oval, rectangular, variable, etc.) having predetermined lengths depending on measures and geometries of the frame to be implemented.

Generally speaking, the material constituting such tube parts can be made of metal (e.g. aluminium or steel) or composite material (e.g. carbon fiber).

The tube parts 2, 3, 2', 3', 2", 3" constitute, in this non-limiting example, the horizontal down tube 2, the steerer tube 3, the oblique top tube 2', the vertical seat tube 3', the vertical seat stays 3" and the horizontal chain stays 2".

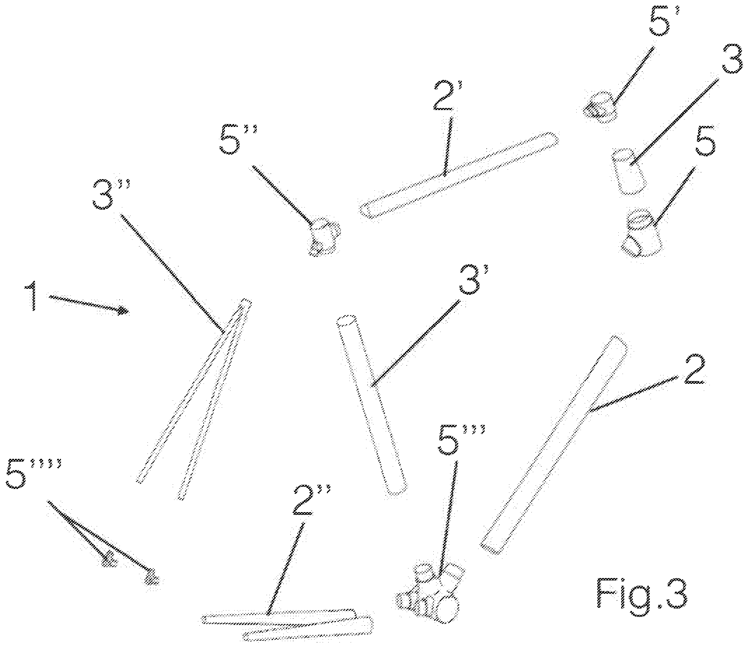

As clearly shown in figures 3-5, the tube pars 2, 3, 2', 3', 2", 3" of the frame 1 are, in the non-limiting example, joined one to another by respective joint elements 5, 5', 5", 5‴, 5ʺʺ.

In the following - for concision requirements - it will be frequently referred to the joining of the tube parts 2 and 3, respectively constituting the oblique top tube and the steerer tube, joined by the joint element 5; however, it has to be intended that such teaching is similar for the remaining tube parts and the other joint elements.

For what concerns the latter, regardless from the material the tube parts are made of, they are made of composite material, preferably carbon fiber or the like.

In general, such material comprise a flexible substrate (e.g. a carbon fiber canvas or the like) impregnated with a resin (e.g. an epoxy resin or the like) that, to cure, has to undergo pressure and/or temperature actions; this point is not talked at length, such type of material (and the respective curing process) being known to the person skilled of the art.

As noted in figures 3-5, in the given example all the joint elements of the frame 1 are made according to the invention; in other embodiments even only one of them is made according to the invention.

Specifically referring to figure 2, the joint elements S and 5' are shown and respectively intended to join the tube parts 2 and 3 with the tube parts 2' and 3.

Referring to the joint element 5, it has to be noted that it extends from the inside of the tube parts 2 and 3 however remaining visible in the real joint zone: in met in this preferred embodiment, the tube parts 2 and 3 are not directly in contact.

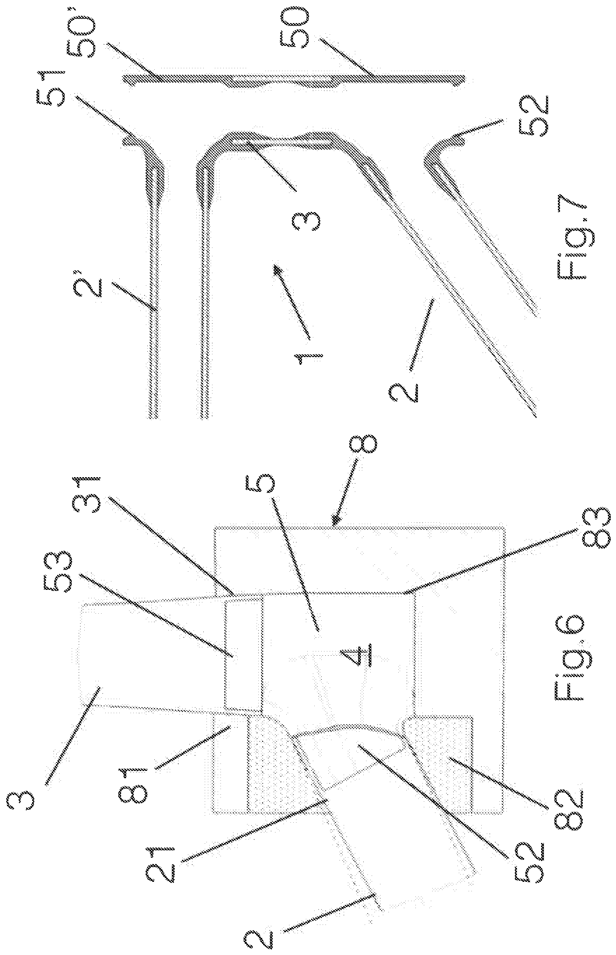

In a variation shown in figure 7, the joint element 50, 50' extends, in addition to the inside of the tube parts 2 and 3, to the outside thereof.

As will be seen later, this type of joint element provides that at least one further layer of composite material is applied on the joint and the corresponding end of the tube elements connected thereto, when the joint material is not cured yet but the end of the joint element has already been inserted in the end portions of the corresponding tube parts.

Variations of the frame according to the invention are also provided, wherein some of the joint elements extend only from the inside of the tube parts (as the joint elements 5, 5' do) and others to the inside and the outside (as the joint elements 50, 50' do).

By the way, it has to be noted that the joint element 5, 5', 50, 50' does not fulfill - in this example - the simple connecting function between the tube parts, but it is also the seat for the steerer series, being conveniently provided - for this purpose - with inner annular shoulders 51, 52 made in one piece with the joint element 5, 5', 50, 50' itself.

Similar advantage is for the joint element 5‴, wherein the seat for the crankset is obtained, which seat can be arranged for the crankset or respective bearings during the forming step of the joint element 5‴, so that additional parts can be avoided and the number of operations and machining processes can be reduced.

We now describe how the invention is implemented, the general method for constraining - or joining - at least one first and one second tube parts 2, 3 by a joint element 5 made of a composite material comprising a cured resin, comprising the steps of
- inserting at least part of said joint element 5 when the resin is not cured, inside at least one end portion 21 , 31 of each tube parts 2, 3, and
- making said resin cure.

Substantially, generally speaking, during the manufacturing the insertion of an approximately shaped joint element 5 is provided, with the still non-cured resin inside the end lengths 21, 31 of the respective tube parts 2, 3, and a curing step of the resin is provided when the joint element 5 is in position.

More in detail, in an advantageous embodiment, the method provides the following steps, preferably consecutively:
a. arranging at least one first and one second tube parts 2, 3 intended to be joined together;
b. arranging an expandable support 4;
c. coating at least part of said expandable support 4 with one or more layers of material pre- impregnated with a non-cured resin, so that said non-cured joint element 5 is made;
d. fitting the end parts 52, 53 of said joint element 5 in corresponding end portions 21, 31 of each tube parts 2, 3;
e. housing the end portions 21, 31 of each tube parts 2, 3 and the non-cured joint element 5 in a mould 8;
f. making said resin cure.

As usual, the mould 8 is formed by at least two parts separable from one another and consisting of a mould part and a matched-mould part together forming a cavity shaped correspondingly to the final shape of the joint, in the coupled condition, to the corresponding end lengths of at least two of the tube pans said joint element connects to one another.

Notably, the step a. provides at least the step of cutting the tube parts 2, 3 in predetermined lengths on the basis of measures referring to the user and the selected geometry of the frame 1.

The expandable support 4 of step b., is preferably an inflatable support like a balloon or made of expandable material, such as silicone or the like.

According to a further feature, the expandable support advantageously has an at least partially expanded condition in which it takes a convenient shape substantially coincident with the shape the joint element S made on its base will have to take- Such support 4 is therefore, in step c, coated - preferably integrally, but also only partially - by a composite material pre-impregnated with a non-cured resin; concerning this material, reference is made to what above.

A thermal action on the material, such as the silicone, or an inflating action both by feeding gas and thermal expansion of the gas contained inside the inflatable support, determines the expansion of the support and therefore die compression of the coat of the still non-cured composite material against the mould walls, as well as the expansion of the coupling ends of the joint against the inner walls of the end lengths of the tube parts in which said ends have been inserted.

The presence of the support 4 is necessary since, in this preferred embodiment, the resin is still non-cured and therefore needs a template on which it has to be applied for reaching the desired shape.

On the contrary, the fact that the support 4 is expandable will be more evident from the description of the following points; for now, it will be enough to note that preferably it comprises any shaped body able to assume different size in a controlled way, on the basis of actions activating the dilation and reduction size functions. In the version of shape of inflatable element, then the support can switch from a deflated configuration to an inflated one, wherein substantially it has shape and size of the joint element 5.

A further alternative to the inflatable support or the silicone element can be a so-called vacuum bag.

For this purpose, the expandable support 4 is operatively connected to pipes of filling fluid (of example, compressed air), not shown in the figures. In step d., once the expandable support 4 has been coated with the material forming the joint element 5 (with the still non-cured resin), the coupling ends or end parts 52, 53 of the joint element 5 are inserted in the corresponding end portions 21, 31 of each tube parts 2, 3.

Subsequently and referring to figure 6, in step e. the end portions 21, 31 of each tube parts 2, 3 and the non-cured joint element 5 are placed in a mould 8.

After the mould 8 has been inserted (or in other alternatives also before) and closed, the support 4 is expanded (e.g. inflated) so that the material of the joint element adheres to the mould walls, more particularly to the walls of the inner cavity 83 of the same mould.

Then, in step f. of the method the resin of the joint element S is cured, for example by applying pressure and heat simultaneously, preferably in an autoclave.

However, other heating/drying means can be provided, which causes the curing of the composite material.

In this way, the resin of the joint element 5 cures and the joint element 5 can withstand the operative loads while using the bicycle.

According to an advantageous feature, the mould 8 comprises a mouth for at least part of the tube parts 2, 3 to be connected to one another. At least part of these mouths, or all the mouths provided, are flexible, i.e. with flexible delimiting walls, i.e. weak relatively to an orientation of the tube part housed in the corresponding mouth, as denoted with numeral 82. The remaining mouths, and in this example the mouth denoted with numeral 81, are made with rigid walls.

Before describing the part of the method relating to the use of such mould 8, it is convenient to briefly linger over the mould itself, in its configuration depicted in the embodiment and in which it has a rigid mouth and a flexible mouth, in order to understand its implementation.

Both the rigid mouth 81 and the flexible mouth 82 are connected to the body of the mould 83, in which the joint element 5 seats (in an operative condition).

The rigid mouth 81 is shaped (about shape and size) so that - when the mould 8 is closed - to be rigidly coupled to the end portion 31 of the tube part 3, which is then held in stable position by the mould 8 itself.

For what concerns the flexible mouth 82, it houses the end portion 21 of the tube part 2 so that to break when the orientation of the tube part 2 relatively to the mould 8 itself is changed, thereby allowing the orientation between the tube part 3 and the tube part 2 to be modified within predetermined limits.

In the present case, the tube part 3 is stably held in the mould 8 since the mouth 81 is rigid, whereby the orientation variation is limited to what possible from the flexibility of the mouth 82. When greater variability of the relative orientation of the two parts is desired, then also the mouth 81 can be made flexible, substantially by doubling the capacity of the mould of allowing the relative orientation of the two tube parts 2, 3 to be adapted.

As will be more evident from the following of the present description, the particular feature of the mouth/s of the mould having elastically flexible or weak walls has its maximum advantage when the frame to be made is a frame having shape closed in itself, such as the frame of the bicycle or the like.

In this case, as depicted in figure 3 to 5, the frame comprises a plurality of joint elements 5, 5', 5", 5‴, 5ʺʺ, and the afore described steps for forming the non-cured joint and the mould shaping and the curing of the composite material are carried out per each of the joint elements.

The carrying out can be concurrent, as preferred contemporaneously for at least two, or preferably for all, of the joint elements 5, 5', 5", 5‴, 5ʺʺ of the frame 1, or the carrying out of said steps, at least the curing steps, can be provided in accordance with a predetermined time succession and a predetermined order of the joint elements.

In practice, for making each joint element 5, 5', 5", 5‴, 5ʺʺ, an expandable specific support and a specific mould 8 are used.

The moulds 8 are mounted in relative positions predetermined by the frame design on a supporting framework or a template subtending a design-defined bidimensional or three-dimensional surface.

The template allows each of the moulds to be fastened in a specific position.

The template can be, per se, panel- or frame- shaped with fastening supports for linear and swinging guides that allow the positions of the single moulds to be modified within certain distances and the same to be rotated around at least one axis perpendicular to the surface subtended by the template itself and along which the single moulds axe distributed in accordance with the frame design.

Once the single moulds have been fastened to said template and properly oriented relatively to one another, the single joint elements are made on the expandable supports by applying one or more layers of composite material thereon. The single joint elements, in the non-cured condition of the composite material, are coupled to the tube parts by inserting the ends of the joint elements in the end lengths of the corresponding tube parts.

The assembly of the joint elements when the composite material is not cured, which are fastened with the tube parts, is then housed in the corresponding mould 8, subsequently closed.

In this step the function of the flexible mouths 82 is evident that, by allowing a certain mobility of the tube parts, allow different geometries of the frame 1 under production to be made, without having pre-angled joint elements and do having the correct relative orientation of the tube parts in the finished frame.

It is therefore possible to orient simply and rapidly, per each couple of tube parts, the two tube parts according to the angle preselected in the designing step of the frame, being sure that such orientation is kept also during the curing step.

Thanks to the template relatively positioning the moulds for the joint elements according to the frame design, the geometry is assured to be exactly as desired: in practice, a pre-assembling of the frame 1 and a contemporaneous orientation are carried out (of the joint elements 5, 5', 5", 5‴, 5ʺʺ of the same); this operation is aided by the flexible mouths of the various moulds (at least one per each frame joint element) that allow the free orientation of the respective tube parts, as described above.

Therefore, the invention also provides the combination of a fastening template to fasten the moulds for the various joints, such template providing that each mould per each of the desired joints is movable relatively to the other joints along two directions defining a plane parallel to the plane subtended by the fame, once the construction thereof is ended, the template being locked in the relative correct position with respect to the other moulds for the other joint elements. Moreover, the template provides also a rotation of the single moulds around at least one rotation axis.

In combination with the use of a template as described above, the manufacturing method provides the cutting to size of the tube parts corresponding to a specific frame, the making of joints with still non-cured resin and the coupling of said joints to the corresponding tube parts, as well as the positioning of each of said coupled joints to the corresponding tube parts in the corresponding mould positioned on a mould-holder template in a predetermined position, therefore a frame being realized complete of all the tube parts and all the joint elements when the resin is still not cured, which frame is housed in each of the joint elements contemporaneously in the corresponding mould and the process of curing the resin and finishing the frame is carried out contemporaneously for all, or at least part, of the joint elements.

The single steps of the process for each of the joint elements are carried out correspondingly to any above described variations of the method.

The fact that the curing of the resin is carried out contemporaneously for the plurality of the joint elements 5, 5', 5", 5‴ by combined action of pressure and temperature, preferably in autoclave, for example by placing contemporaneously in the autoclave all the tube parts and the moulds, is advantageous since it allows the correct geometry of the frame relatively to the angles between the single tube parts to be obtained.

According to another embodiment referring to the bicycle frame, the latter is formed by a main triangle comprising the joints, 5, 5', 5", 5‴ and the tube parts 2, 2', 3, 3' and by a further back triangle consisting of the back forks 2" and 3", which connect respectively to the joint 5‴ housing also the crankset and to the joint 5".

In this case, the method provides for realizing in a first step, as described above, the main frame consisting of the joints 5, 5', 5" and 5‴ and of the tube parts 2, 2', 3, 3' and, in a second step, applying the back forks consisting of the tube parts 2", 3" and the joints 5ʺʺ.

In such a further step, the coupling of said parts is carried out, for example, also through other techniques as the gluing and the like. The afore listed purposes are then achieved.

## Claims

1. Method of manufacturing at least part of a frame (1) of a bicycle, wherein the frame (1) comprises tube parts (2, 3) joined one to another, comprising the step of
a) arranging at least one first and one second tube parts (2, 3) intended to be joined together;
b) providing a mould (8), the mould (8) being provided with at least one mould part and at least one matched-mould part; part; and the mould configured to close said at least one mould part with said at least one matched-mould part;
c) said mould (8) being formed by at least two parts separable from one another and consisting of a mould part and a matched-mould part together forming a cavity shaped correspondingly to the final shape of the joint (5), in the coupled condition, to the corresponding end lengths of at least two of the tube parts and such that joint (5) connects to one another;
d) wherein the mould (8) has a mouth for at least part of the tube parts (2, 3) intended to be connected to one another by the joint (5), at least one of said mouths intended to receive the end portion of a corresponding tube part (2, 3) or at least one part of said mouths for the corresponding tube parts, is made as having flexible walls;
e) arranging an expandable support (4);
f) coating at least part of said expandable support (4) with at least one layer of material pre-impregnated with a non-cured resin, so that a non-cured joint (5) is made; and fitting the end parts (52, 53) of said joint (5) in corresponding end portions (21 , 31) of each tube parts (2, 3);
g) housing the end portions (21, 31) of each tube parts (2, 3) and the non-cured joint (5) in the mould (8);
h) joining at least one first and one second tube parts (2, 3) by inserting at least part of said joint (5) when the resin is not cured, inside at least one end portion (21, 31) of each tube parts (2, 3),
i) closing said at least one mould part with said at least one matched-mould part; and
j) causing said resin to cure by holding said at least one first and second tube parts (2, 3) in their correct position relatively to each other.

2. Method according to the claim 1, wherein the mould (8) has a mouth for at least part of the tube parts (2, 3) intended to be connected to one another by the joint (5), at least one of said mouths (82) intended to receive the end portion of a corresponding tube part (2, 3) or at least one part or all of said mouths (82) for the corresponding tube parts (2, 3) is made as having flexible walls whereas the remaining mouth/s (81) intended to receive the end portion of other tube parts has/have rigid side walls.

3. Method according to one or more of the preceding claims, **characterized by** the steps of:
- providing a number of moulds (8) corresponding to the number of joints (5, 5', 5", 5‴) designed for making a frame with a predetermined project;
- said moulds being shaped correspondingly to the outer shape provided for each joint (5, 5', 5", 5‴);
- providing a framework or template for variably positioning and orienting, in the subtended plane thereof, said one or more moulds (8) and fastening the single moulds (8) in the relative positions the frame design provides for and in the relative orientations said frame design provides for;
- providing a number of tube parts (2, 2', 3, 3') corresponding to those of said frame design and having length corresponding to that of the frame design;
providing a number of expandable supports (4) for at least part, preferably for all, of the joints (5, 5', 5", 5‴) said frame design provides for;
- carrying out, for each joint element (5, 5', 5", 5‴), the steps c) to f).

4. Method according to claim 3, wherein the steps c) to f) of forming the joints (5, 5', 5", 5‴) and the curing ones can be carried out according to one of the two alternative modes:
contemporaneously for alt or at least part of the joints;
in accordance with a predetermined sequence that provides both a time succession and a succession relating to order of the joints that undergo the forming, expanding and curing operations.

5. Method according to one or more of the preceding claims, wherein the resin curing step is carried out contemporaneously or sequentially for a plurality of joints (5, 5', 5", 5‴) by combined pressure and temperature action, since it is preferably carried out in autoclave.

6. Method according one or more of the preceding claims, wherein before carrying out the step g) and after having carried out the step f), a further layer of composite material is applied both on the part of the joint (5) and on at least one of the end portions of at least one of the tube parts (2, 3) connected to said joint (5).

7. Method according one or more of the preceding claims, wherein the expandable support consists of a body at least partially constituted by expandable material by means of inflation operation through pressurized fluid supply and/or thermal expansion operation or through vacuum bag.

8. Method according to one or more of the preceding claims, wherein in the coating step of the supporting element with composite material, the supporting element is in a partially expanded condition.

## Patentansprüche

1. Verfahren zur Herstellung zumindest eines Teils eines Rahmens (1) eines Fahrrads, wobei der Rahmen (1) miteinander verbundene Rohrteile (2, 3) umfasst, umfassend den folgenden Schritt
a) Anordnen von mindestens einem ersten und einem zweiten Rohrteil (2, 3), die miteinander verbunden werden sollen;
b) Bereitstellen einer Form (8), wobei die Form (8) mit mindestens einem Formteil und mindestens einem passenden Formteil versehen ist; und wobei die Form so konfiguriert ist, dass sie das mindestens eine Formteil mit dem mindestens einen passenden Formteil verschließt;
c) die Form (8) aus mindestens zwei voneinander trennbaren Teilen besteht und ein Formteil und ein Gegenformteil umfasst, die zusammen einen Hohlraum bilden, der der endgültigen Form der Verbindung (5) im gekuppelten Zustand, den entsprechenden Endlängen von mindestens zwei der Rohrteile und der Art, wie die Verbindung (5) miteinander verbunden ist, entspricht;
d) wobei die Form (8) eine Öffnung für mindestens ein Teil der Rohrteile (2, 3) aufweist, die durch die Verbindung (5) miteinander verbunden werden sollen, wobei mindestens eine der Öffnungen, die zur Aufnahme des Endabschnitts eines entsprechenden Rohrteils (2, 3) vorgesehen ist, oder mindestens ein Teil der Öffnungen für die entsprechenden Rohrteile mit flexiblen Wänden ausgebildet ist;
e) Anbringen einer expandierbaren Stütze (4);
f) Beschichten mindestens eines Teils der expandierbaren Stütze (4) mit mindestens einer Schicht aus einem mit einem unausgehärteten Harz vorimprägnierten Material, sodass eine unausgehärtete Verbindung (5) entsteht, und Einpassen der Endstücke (52, 53) dieser Verbindung (5) in entsprechende Endabschnitte (21, 31) jedes Rohrstücks (2, 3);
g) Unterbringen der Endabschnitte (21, 31) jedes Rohrteils (2, 3) und der nicht ausgehärteten Verbindung (5) in der Form (8);
h) Verbinden mindestens eines ersten und eines zweiten Rohrteils (2, 3) durch Einführen mindestens eines Teils der Verbindung (5), wenn das Harz noch nicht ausgehärtet ist, in mindestens einen Endabschnitt (21, 31) jedes Rohrteils (2, 3),
i) Schließen des mindestens einen Formteils mit dem mindestens einen passenden Formteil; und
j) Aushärten des Harzes, indem die mindestens einen ersten und zweiten Rohrteile (2, 3) in ihrer korrekten Position relativ zueinander gehalten werden.

2. Verfahren nach Anspruch 1, wobei die Form (8) eine Öffnung für mindestens ein Teil der Rohrteile (2, 3) aufweist, die durch die Verbindung (5) miteinander verbunden werden sollen, wobei mindestens eine der Öffnungen (82) zur Aufnahme des Endabschnitts eines entsprechenden Rohrteils (2, 3) vorgesehen ist, oder mindestens ein Teil oder alle der Öffnungen (82) für die entsprechenden Rohrteile (2, 3) mit flexiblen Wänden ausgebildet ist, während die verbleibende/n Öffnung/en (81), die zur Aufnahme des Endabschnitts anderer Rohrteile bestimmt ist/sind, starre Seitenwände aufweist/aufweisen.

3. Verfahren nach einem oder mehreren der vorstehenden Ansprüche, **gekennzeichnet durch** die folgenden Schritte:
- Bereitstellen einer Anzahl von Formen (8), die der Anzahl der Verbindungen (5, 5', 5", 5‴) entspricht, die für die Herstellung eines Rahmens mit einem vorbestimmten Projekt vorgesehen sind;
- die Formen entsprechend der für jede Verbindung (5, 5', 5", 5‴) vorgesehenen Außenform gestaltet sind;
- Bereitstellen eines Rahmens oder einer Vorlage zum variablen Positionieren und Ausrichten der einen oder mehreren Formen (8) in deren zugrunde liegender Ebene und Befestigen der einzelnen Formen (8) in den relativen Positionen, die die Rahmenkonstruktion vorsieht, und in den relativen Ausrichtungen, die die Rahmenkonstruktion vorsieht;
- Bereitstellen einer Anzahl von Rohrteilen (2, 2', 3, 3'), die denen der Rahmenkonstruktion entsprechen und eine Länge aufweisen, die derjenigen der Rahmenkonstruktion entspricht;
Bereitstellen einer Anzahl von expandierbaren Stützen (4) für mindestens ein Teil, vorzugsweise für alle, der Verbindungen (5, 5', 5", 5‴), die die Rahmenkonstruktion vorsieht;
- Durchführen der Schritte c) bis f) für jedes Verbindungselement (5, 5', 5", 5‴).

4. Verfahren nach Anspruch 3, wobei die Schritte c) bis f) zum Bilden der Verbindungen (5, 5', 5", 5‴) und deren Aushärten nach einer von zwei alternativen Methoden durchgeführt werden können:
gleichzeitig für alle oder zumindest ein Teil der Verbindungen;
nach einer vorbestimmten Reihenfolge, die sowohl eine zeitliche Abfolge als auch eine Sequenz in Bezug auf die Reihenfolge der Verbindungen vorsieht, die den Bildungs-, Expansions- und Aushärtungsvorgängen unterzogen werden.

5. Verfahren nach einem oder mehreren der vorstehenden Ansprüche, wobei der Schritt des Aushärtens des Harzes gleichzeitig oder nacheinander für eine Vielzahl von Verbindungen (5, 5', 5", 5‴) durch kombinierte Druck- und Temperatureinwirkung durchgeführt wird, da er vorzugsweise in einem Autoklav durchgeführt wird.

6. Verfahren nach einem oder mehreren der vorstehenden Ansprüche, wobei vor dem Durchführen des Schritts g) und nach dem Durchführen des Schritts f) eine weitere Schicht aus einem Verbundwerkstoff sowohl auf das Teil der Verbindung (5) als auch auf mindestens einen der Endabschnitte mindestens eines der mit der Verbindung (5) verbundenen Rohrteile (2, 3) aufgebracht wird.

7. Verfahren nach einem oder mehreren der vorstehenden Ansprüche, wobei die expandierbare Stütze aus einem Körper besteht, der mindestens teilweise aus expandierbarem Material besteht, das durch Aufblasen mittels Druckfluidzufuhr und/oder thermischer Expansion oder durch einen Vakuumbeutel expandiert wird.

8. Verfahren nach einem oder mehreren der vorstehenden Ansprüche, wobei sich das Stützelement beim Beschichten mit Verbundwerkstoff in einem teilweise expandierten Zustand befindet.

## Revendications

1. Procédé de fabrication d'au moins une partie d'un cadre (1) de bicyclette, dans lequel le cadre (1) comprend des parties tubulaires (2, 3) assemblées entre elles, comprenant les étapes suivantes
a) la disposition d'au moins une première et seconde parties tubulaires (2, 3) destinées à être assemblées entre elles ;
b) la fourniture d'un moule (8), le moule (8) étant doté d'au moins une partie de moule et d'au moins une partie de moule correspondante ; et le moule étant configuré pour fermer ladite au moins une partie de moule avec ladite au moins une partie de moule correspondante ;
c) ledit moule (8) étant formé d'au moins deux parties séparables l'une de l'autre et constituée d'une partie de moule et d'une partie de moule correspondante formant ensemble une cavité de manière à correspondre à la forme finale du joint (5), dans l'état couplé, aux longueurs d'extrémité correspondantes d'au moins deux des parties tubulaires et de telle sorte que le joint (5) relie celles-ci l'un à l'autre ;
d) dans lequel le moule (8) présente une ouverture destinée à recevoir au moins une partie des parties tubulaires (2, 3) destinées à être reliées entre elles par le joint (5), au moins une desdites ouvertures étant destinée à recevoir l'extrémité d'une partie tubulaire correspondante (2, 3) ou au moins une partie desdites ouvertures étant destinée aux parties tubulaires correspondantes, est conçue avec des parois flexibles ;
e) la disposition d'un support extensible (4) ;
f) le revêtement d'au moins une partie dudit support extensible (4) avec au moins une couche de matériau pré-imprégné d'une résine non durcie, de sorte qu'un joint (5) non durci soit réalisé ; et l'ajustement des parties d'extrémité (52, 53) dudit joint (5) dans les extrémités correspondantes (21, 31) de chaque partie tubulaire (2, 3) ;
g) le placement des extrémités (21, 31) de chaque partie tubulaire (2, 3) et du joint (5) non durci dans le moule (8) ;
h) l'assemblage d'au moins une première et seconde parties tubulaires (2, 3) en insérant au moins une partie dudit joint (5) lorsque la résine n'est pas durcie, à l'intérieur d'au moins une extrémité (21, 31) de chaque partie tubulaire (2, 3),
i) la fermeture de ladite au moins une partie de moule avec ladite au moins une partie de moule correspondante ; et
j) le durcissement de ladite résine en maintenant ladite au moins une première et seconde parties tubulaires (2, 3) dans leur position correcte l'une par rapport à l'autre.

2. Procédé selon la revendication 1, dans lequel le moule (8) présente une ouverture pour au moins une partie des parties tubulaires (2, 3) destinées à être reliées entre elles par le joint (5), au moins une desdites ouvertures (82) étant destinée à recevoir l'extrémité d'une partie tubulaire correspondante (2, 3) ou au moins une partie ou la totalité desdites ouvertures (82) étant destinées aux parties tubulaires correspondantes (2, 3) est conçue avec des parois flexibles tandis que la ou les ouvertures (81) restantes destinées à recevoir l'extrémité d'autres parties tubulaires ont des parois latérales rigides.

3. Procédé selon une ou plusieurs des revendications précédentes, **caractérisé par** les étapes suivantes :
- la fourniture d'un certain nombre de moules (8) correspondant au nombre de joints (5, 5', 5", 5‴) conçus pour réaliser un cadre selon un projet prédéterminé ;
- lesdits moules étant façonnés de manière à correspondre à la forme extérieure prévue pour chaque joint (5, 5', 5'', 5‴) ;
- la fourniture d'une structure ou d'un gabarit pour positionner et orienter de manière variable, dans le plan qu'il définit, lesdits un ou plusieurs moules (8) et la fixation des moules individuels (8) dans les positions relatives prévues par la conception du cadre et dans les orientations relatives prévues par ladite conception du cadre ;
- la fourniture d'un nombre de parties tubulaires (2, 2', 3, 3') correspondant à celles de ladite conception du cadre et présentant une longueur correspondant à celle de la conception du cadre ;
- la fourniture d'un nombre de supports extensibles (4) pour au moins une partie, de préférence pour la totalité, des joints (5, 5', 5'', 5''') prévus par la conception du cadre ;
- la réalisation, pour chaque élément de joint (5, 5', 5'', 5'''), des étapes c) à f).

4. Procédé selon la revendication 3, dans lequel les étapes c) à f) de formation des joints (5, 5', 5'', 5‴) et de durcissement peuvent être réalisées selon l'un des deux modes alternatifs suivants :
simultanément pour la totalité ou au moins une partie des joints ;
conformément à une séquence prédéterminée qui assure à la fois une succession temporelle et une succession relative à l'ordre des joints qui subissent les opérations de formation, d'expansion et de durcissement.

5. Procédé selon une ou plusieurs des revendications précédentes, dans lequel l'étape de durcissement de la résine est réalisée simultanément ou successivement pour une pluralité de joints (5, 5', 5'', 5''') par action combinée de pression et de température, étant donné qu'elle est de préférence réalisée en autoclave.

6. Procédé selon une ou plusieurs des revendications précédentes, dans lequel avant de réaliser l'étape g) et après avoir réalisé l'étape f), une couche supplémentaire de matériau composite est appliquée à la fois sur la partie du joint (5) et sur au moins une des extrémités d'au moins une des parties tubulaires (2, 3) reliées audit joint (5).

7. Procédé selon une ou plusieurs des revendications précédentes, dans lequel le support extensible est constitué d'un corps au moins partiellement constitué d'un matériau extensible par opération de gonflage au moyen d'une alimentation en fluide sous pression et/ou par opération d'expansion thermique ou au moyen d'un sac sous vide.

8. Procédé selon une ou plusieurs des revendications précédentes, dans lequel, lors de l'étape de revêtement de l'élément de support avec un matériau composite, l'élément de support est dans un état partiellement expansé.
